# EUROPEAN PATENT SPECIFICATION

(11) **EP 1 482 264 B1**
(45) Date of publication and mention of the grant of the patent: **26.09.2007**
(21) Application number: 04102000.9
(22) Date of filing: 07.05.2004
(51) Int. Cl.: F25D 29/00

(54) **Refrigerator with improved temperature control**
Kühlschrank mit verbesserter Temperaturregelung
Réfrigérateur avec contrôle amelioré de la température

(30) Priority: 09.05.2003 IT TO20030343
(43) Date of publication of application: 01.12.2004
(73) Proprietor: C.R.F. SOCIETA' CONSORTILE PER AZIONI, 10043 Orbassano (Torino) (IT)
(72) Inventor: PARODI, Maria Laura, 10043 Orbassano (IT)
(74) Representative: Jorio, Paolo

(56) References cited:
- WO-A-02/31453
- DE-A- 3 509 389
- US-A1- 2004 031 274
- US-B1- 6 526 766

## Description

The present invention relates to a refrigerator with improved temperature control.

As is known, the temperature inside a refrigerator is maintained constant by means of a thermostat, which turns the refrigeration circuit compressor on and off according to the difference between the temperature measured by a temperature sensor located at a given point inside the refrigerator, and a reference temperature adjustable by the user, normally by means of a regulating knob or screw device located inside, or on the front wall of, the refrigerator.

As is also known, the temperature sensors of currently marketed refrigerators only provide for local temperature measurement, i.e. only indicate the temperature in a very limited area around the point at which the temperature sensor is located. This, combined with the normally uneven temperature inside the refrigerator for various reasons, including the food contained in it, results in fairly inefficient on-off thermostat control of the refrigeration circuit compressor.

WO 02/31453, DE 35 09 389, US 6 526 766, and US 2004/031274 disclose a refrigerator device provided with an infrared temperature sensor for detecting an internal operating temperature of the device.

It is an object of the present invention to provide a refrigerator designed to eliminate the aforementioned drawbacks of known refrigerators.

According to the present invention, there is provided a refrigerator as claimed in Claim 1.

A preferred, non-limiting embodiment of the present invention will be described by way of example with reference to the accompanying drawings, in which:
Figure 1 shows a view in perspective of a refrigerator in accordance with the present invention;
Figure 2 shows a side section of the Figure 1 refrigerator;
Figure 3 shows a time-temperature graph of a refrigerator in accordance with the invention, when empty with the door closed;
Figure 4 shows a time-temperature graph of a refrigerator in accordance with the invention, when empty and with the door opened and closed repeatedly;
Figure 5 shows a block diagram of an electronic circuit of the refrigerator.

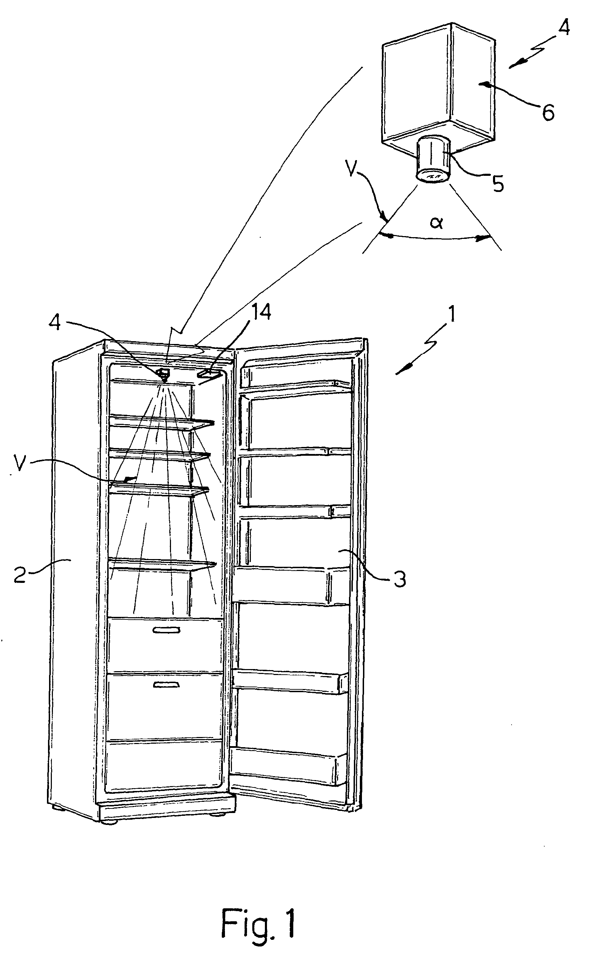

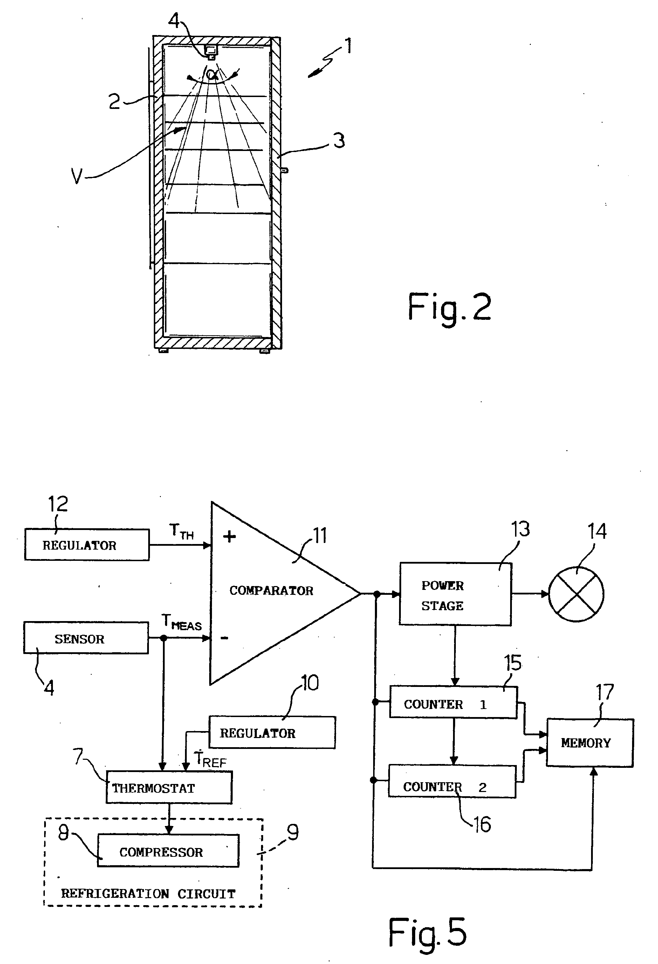

Number 1 in Figures 1 and 2 indicates as a whole a refrigerator in accordance with the present invention. By way of a non-limiting example, Figure 1 shows an ordinary domestic so-called cabinet refrigerator, i.e. of the type comprising a cabinet structure 2, for containing and preserving food products at low temperature, and a front door 3.

As will be clear, however, from the following disclosure, the present invention may be applied not only to cabinet refrigerators of the type shown in Figures 1 and 2, but also to any other type of refrigerator, such as top-loaded chest refrigerators, normally used for freezer storage; large commercial refrigerators for shops or other commercial outlets; refrigeration counters, with or without top glass covers, permitting display and access to products; display refrigerators, which are normally installed in shop windows or so as to display the contents and permit access from inside the shop; walk-in refrigerators, or so-called cold stores or cold rooms, with enough space inside and doors large enough to permit walk-in access to load or remove produce; refrigerator vehicles; refrigeration ships; etc.

Refrigerator 1 - of which only the parts required for a clear understanding of the present invention will be described - comprises a known refrigeration circuit (not shown or described in detail) which, as is known, comprises a condenser, an evaporator, a motor-driven compressor, and a thermostat for automatically regulating the temperature inside the refrigerator by turning the motor-driven compressor on and off.

The thermostat regulates the temperature inside the refrigerator on the basis of information supplied by a radiant mean temperature sensor 4, which is an infrared sensor with a field of view V determined by the optical system 5 of sensor 4, has a thermocouple 6 housed inside a vacuum chamber, and supplies information about the mean temperature radiated by the objects within its field of view V. By adjusting the optical system 5 of radiant mean temperature sensor 4, the field of view of sensor 4 can therefore be adapted to the specific conformation of refrigerator 1 in which the sensor is installed.

According to an aspect of the present invention, radiant mean temperature sensor 4 is conveniently located on the top wall of the cabinet structure, so that its field of view V covers part of the interior volume of cabinet structure 2 and part of door 3, as shown schematically in Figure 2.

The field of view V of radiant mean temperature sensor 4 is therefore not obstructed by the food products within the field, and the temperature signal supplied by the sensor contains information relating not only to the temperature of the food products in the compartments inside cabinet structure 2, but also to the temperature of the food products in the door 3 compartments, which latter information is extremely useful in simplifying the layout of the refrigerator, as explained later on.

A test campaign conducted by the Applicant has shown the best results, in terms of reading accuracy, to be obtained using a radiant mean temperature sensor 4 with a conical field of view V with a flare angle α of 15° to 20° and preferably of 17°.

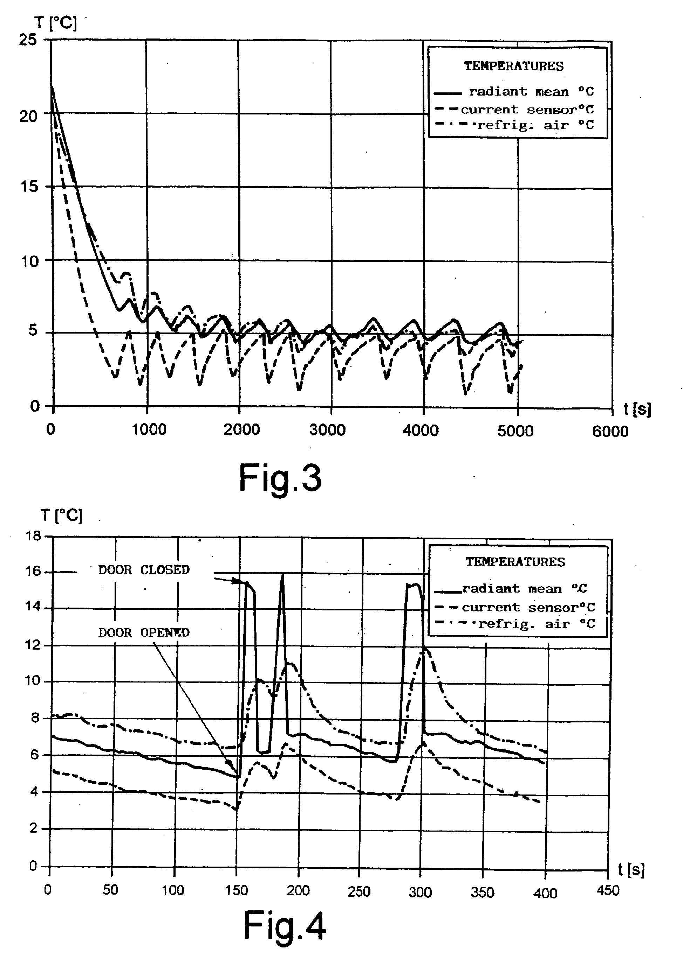

Figures 3 and 4 show the Applicant's test campaign readings relative to a refrigerator in accordance with the invention when empty with the door closed, and, respectively, to a refrigerator in accordance with the invention when empty with the door opened and closed repeatedly.

More specifically, Figures 3 and 4 show comparative time-temperature graphs of the temperature inside the refrigerator measured by a radiant mean temperature sensor in accordance with the invention (continuous line), the temperature measured by a temperature sensor of the type used in currently marketed refrigerators (dash line), and the air temperature at the centre of the shelf in which the latter temperature sensor is located (dot-and-dash line), and which is measured using a normal thermocouple.

As shown in Figures 3 and 4, the Applicant's readings show not only the greater accuracy of the values measured by a radiant mean temperature sensor as compared with those of a temperature sensor of the type used in currently marketed refrigerators (Figure 3), but also how the radiant mean temperature sensor is able to instantly detect opening and closing of the door (Figure 4).

With particular reference to Figure 4, by also covering part of door 3 of refrigerator 1, the field of view V of radiant mean temperature sensor 4, when door 3 is opened, also includes the outside environment which has a much higher temperature than inside refrigerator 1. This sharp variation in temperature is immediately detected by radiant mean temperature sensor 4, so that the temperature signal generated by it has a very steep leading edge followed by an equally steep trailing edge when door 3 is closed.

By virtue of radiant mean temperature sensor 4 being able to real-time detect, i.e. with no significant delay, any sharp variations in temperature produced within field of view V by opening and closing door 3 of refrigerator 1, refrigerator 1 can be provided with various additional functions which are either impossible to achieve or only achievable at extremely high cost on currently marketed refrigerators.

More specifically, according to another aspect of the present invention, the temperature signal supplied by radiant mean temperature sensor 4 may be used for direct on-off control of the light inside the refrigerator, instead of employing a switch on door 3 of refrigerator 1, as in currently marketed refrigerators. As stated above, this provides for greatly simplifying the layout, and so reducing the cost, of the electric system of refrigerator 1.

By way of a non-limiting example, Figure 5 shows a block diagram of one possible electric system of refrigerator 1.

As shown in Figure 5, the temperature T_{MEAS} measured by radiant mean temperature sensor 4 is supplied to a thermostat 7, which automatically regulates the temperature inside refrigerator 1 - in known manner not described in detail - by turning on and off the motor-driven compressor 8 of the refrigeration circuit - shown schematically by a dash line and indicated as a whole by 9 - so that the temperature T_{MEAS} measured by radiant mean temperature sensor 4 equals a reference temperature T_{REF} adjustable by the user by means of a conventional regulating knob or screw device 10 provided inside, or on the front wall of, refrigerator 1.

The temperature T_{MEAS} measured by radiant mean temperature sensor 4 is also supplied to a first input of a threshold crossover detecting circuit defined, for example, by a comparator 11, a second input of which is supplied with a threshold temperature T_{H} adjustable according to the characteristics of radiant mean temperature sensor 4 and refrigerator 1 (e.g. between 10°C and 15°C in the Figure 4 embodiment) by means, for example, of a regulating device 12, and the output of which supplies a logic control signal which assumes a first logic level, e.g. high, when the temperature inside the refrigerator is above the threshold temperature, and a second logic level, e.g. low, when the temperature inside the refrigerator is below the threshold temperature. The control signal is supplied to a final power stage 13 which supplies, or not, electrical power to the interior light 14 of refrigerator 1 on the basis of the logic level of the control signal.

According to another aspect of the present invention, the temperature signal supplied by radiant mean temperature sensor 4 may also be used to obtain information concerning how long and how often door 3 of refrigerator 1 is opened, which information is especially valuable to manufacturers in establishing future refrigerator design specifications.

To do this, the electric system of the Figure 5 refrigerator can be modified by simply adding a first counter 15 connected to comparator 11 and designed to increase one unit when the control signal from comparator 11 switches to the first logic level indicating door 3 of refrigerator 1 is open; a second counter 16 also connected to the output of comparator 11, and which is activated when the control signal from comparator 11 switches to the first logic level indicating door 3 of refrigerator 1 is open, and is deactivated when the control signal from comparator 11 switches to the second logic level indicating door 3 of refrigerator 1 is closed, thus measuring the time interval in which door 3 of refrigerator 1 remains open; and a memory circuit 17, which is connected to comparator 11 and the two counters 15 and 16, is readable from the outside, and memorizes, whenever door 3 of refrigerator 1 is opened, the content of both counters 15, 16, together with the instants in which door 3 is opened, so that the memorized data can be downloaded by the refrigerator manufacturer to determine how often and how long door 3 is opened.

The advantages of the refrigerator according to the present invention will be clear from the foregoing description.

In particular, one radiant mean temperature sensor provides simultaneously for accurate temperature measurement, for detecting opening of the refrigerator door, and for determining how often and how long the door is opened, thus greatly simplifying the layout, and reducing the cost, of the refrigerator.

Clearly, changes may be made to the refrigerator as described and illustrated herein without, however, departing from the scope of the present invention as defined in the accompanying claims.

## Claims

1. A refrigerator (1) having at least one door (3) and comprising radiant mean temperature sensing means (4); **characterized in that** said radiant mean temperature sensing means (4) are arranged within said refrigerator so as to have a field of view (V) which covers at least part of said door (3).

2. A refrigerator as claimed in claim 1, comprising detecting means (11) coupled to said radiant mean temperature sensing means (4) and configured to detect opening/closing of said door on the basis of a measured temperature (T_{MEAS}) measured by said radiant mean temperature sensing means (4).

3. A refrigerator as claimed in claim 1 or 2, having a housing structure (2) substantially in the form of a cabinet, and wherein said radiant mean temperature sensing means (4) are located on a top wall of said housing structure (2).

4. A refrigerator as claimed in any one of the foregoing claims, comprising lighting means (14) and control means (11, 13) for controlling said lighting means (14), and wherein said control means (11, 13) receive a measured temperature (T_{MEAS}) measured by said radiant mean temperature sensing means (4), and control the operating status of said lighting means (14) on the basis of said measured temperature (T_{MEAS}).

5. A refrigerator as claimed in claim 4, wherein said control means (11, 13) also receive a threshold temperature (T_{TH}), and turn said lighting means (14) on when said measured temperature (T_{MEAS}) is above said threshold temperature (T_{TH}).

6. A refrigerator as claimed in any one of the foregoing claims, comprising a refrigeration circuit (9), temperature regulating means (10), and controlling means (7) for controlling said refrigeration circuit (9), and wherein said controlling means (7) receive a reference temperature (T_{REF}) from said temperature regulating means (10) and said measured temperature (T_{MEAS}) from said radiant mean temperature sensing means (4), and control the operating status of said refrigeration circuit (9) on the basis of the relationship between said measured temperature (T_{MEAS}) and said reference temperature (T_{REF}).

## Patentansprüche

1. Kühlgerät (1) mit wenigstens einer Tür (3) und mit Mittlere-Strahlungstemperatur-Fühlmitteln (4), **dadurch gekennzeichnet, dass** die Mittlere-Strahlungstemperatur-Fühlmittel (4) in dem Kühlgerät angeordnet sind, so dass sie ein Sehfeld (V) haben, welches zumindest einen Teil der Tür (3) abdeckt.

2. Kühlgerät wie in Anspruch 1 beansprucht, mit Erfassungsmitteln (11), die mit den Mittlere-Strahlungstemperatur-Fühlmitteln (4) gekoppelt sind und die eingerichtet sind zum Erfassen eines Öffnens/Schließens der Tür auf der Basis einer gemessenen Temperatur (T_{MEAS}), die von den Mittlere-Strahlungstemperatur-Fühlmitteln (4) gemessen wurde.

3. Kühlgerät wie in Anspruch 1 oder 2 beansprucht, mit einer Gehäusestruktur (2), die im Wesentlichen die Form eines Schrankes aufweist, und wobei die Mittlere-Strahlungstemperatur-Fühlmittel (4) an einer oberen Wand der Gehäusestruktur (2) angeordnet sind.

4. Kühlgerät wie in einem der vorhergehenden Ansprüche beansprucht, mit Beleuchtungsmitteln (14) und Steuermitteln (11, 13) zum Steuern der Beleuchtungsmittel (14), und wobei die Steuermittel (11, 13) eine gemessene Temperatur (T_{MEAS}), die von den Mittlere-Strahlungstemperatur-Fühlmitteln (4) gemessen wurde, empfangen und den Betriebszustand der Beleuchtungsmittel (14) auf der Basis der gemessenen Temperatur (T_{MEAS}) steuern.

5. Kühlgerät wie in Anspruch 4 beansprucht, wobei die Steuermittel (11, 13) ferner eine Grenztemperatur (T_{TH}) empfanden und die Beleuchtungsmittel (14) einschalten, wenn die gemessene Temperatur (T_{MEAS}) über der Grenztemperatur (T_{TH}) ist.

6. Kühlgerät wie in einem der vorhergehenden Ansprüche beansprucht, mit einem Kühlkreislauf (9), Temperatur-Einstellmitteln (10) und Steuermitteln (7) zum Steuern des Kühlkreislaufs (9), und wobei die Steuermittel (7) eine Referenztemperatur (T_{REF}) von den Temperatur-Einstellmitteln (10) und die gemessene Temperatur (T_{MEAS}) von den Mittlere-Strahlungstemperatur-Fühlmitteln (4) empfangen und den Betriebszustand des Kühlkreislaufs (9) auf der Basis des Verhältnisses zwischen der gemessenen Temperatur (T_{MEAS}) und der Referenztemperatur (T_{REF}) steuern.

## Revendications

1. Réfrigérateur (1) ayant au moins une porte (3) et comprenant des moyens de détection de température moyenne de rayonnement (4) ; **caractérisé en ce que** lesdits moyens de détection de température moyenne de rayonnement (4) sont aménagés à l'intérieur dudit réfrigérateur de manière à avoir un champ de vision (V) qui couvre au moins une partie de ladite porte (3).

2. Réfrigérateur selon la revendication 1, comprenant des moyens de détection (11) couplés auxdits moyens de détection de température moyenne de rayonnement (4) et configurés pour détecter l'ouverture/fermeture de ladite porte sur la base en se basant sur une température mesurée (T_{MES}) qui l'est par lesdits moyens de détection de température moyenne de rayonnement (4).

3. Réfrigérateur selon la revendication 1 ou 2, ayant une structure de rangement (2) sensiblement en forme d'armoire, et dans lequel lesdits moyens de détection de température moyenne de rayonnement (4) sont placés sur une paroi supérieure de ladite structure de rangement (2).

4. Réfrigérateur selon l'une quelconque des revendications précédentes, comprenant des moyens d'éclairage (14) et des moyens de commande (11, 13) pour commander lesdits moyens d'éclairage (14), et dans lequel lesdits moyens de commande (11, 13) reçoivent une température mesurée (T_{MES}) qui l'est par lesdits moyens de détection de température moyenne de rayonnement (4) et commandent l'état de fonctionnement desdits moyens d'éclairage (14) sur la base de ladite température mesurée (T_{MES}).

5. Réfrigérateur selon la revendication 4, dans lequel lesdits moyens de commande (11, 13) reçoivent également une température de seuil (T_{TH}) et allument lesdits moyens d'éclairage (14) lorsque ladite température mesurée (T_{MES}) est supérieure à ladite température de seuil (T_{TH}).

6. Réfrigérateur selon l'une quelconque des revendications précédentes, comprenant un circuit de réfrigération (9), des moyens de régulation de température (10) et des moyens de commande (7) pour commander ledit circuit de réfrigération (9) , et dans lequel lesdits moyens de commande (7) reçoivent une température de référence (T_{REF}) desdits moyens de régulation de température (10) et ladite température mesurée (T_{MES}) desdits moyens de détection de température moyenne de rayonnement (4) et commandent l'état de fonctionnement dudit circuit de réfrigération (9) sur la base de la relation entre ladite température mesurée (T_{MES}) et ladite température de référence (T_{REF}).
